# EUROPEAN PATENT SPECIFICATION

(11) **EP 3 136 876 B1**
(45) Date of publication and mention of the grant of the patent: **09.01.2019**
(21) Application number: 15785352.4
(22) Date of filing: 29.04.2015
(51) Int. Cl.: A23L 2/56

(54) **METHOD FOR DRYING REACTION FLAVOR MIXTURES**
VERFAHREN ZUM TROCKNEN VON REAKTIONSAROMAMISCHUNGEN
PROCÉDÉ DE SÉCHAGE DE MÉLANGES D'ARÔMES ISSUS DE RÉACTION

(30) Priority: 29.04.2014 US 201461985658 P
(43) Date of publication of application: 08.03.2017
(73) Proprietor: International Flavors & Fragrances Inc., New York, NY 10019 (US)
(72) Inventor: BRODOCK, Michael, Florence, New Jersey 08518 (US); GABBARD, Ronald, Farmingdale, New Jersey 07727 (US); HANS, Keith T., Princeton, New Jersey 08540 (US); KIM, Jung-A, Edgewater, New Jersey 07020 (US); KRAUT, Kenneth, Union Beach, New Jersey 07735 (US); VUICH, Richard, Belle Mead, New Jersey 08502 (US); ZAORSKI, Mariusz, Belleville, New Jersey 07109 (US)
(74) Representative: Barker Brettell LLP
(86) International application number: PCT/US2015/028207
(87) International publication number: WO 2015/168238

(56) References cited:
- EP-A2- 0 574 764
- WO-A1-97/00313
- US-A- 3 879 561
- US-A- 3 952 109
- US-A- 5 089 278
- US-A- 5 316 782
- US-A- 5 368 879
- US-A1- 2005 042 349
- US-A1- 2006 045 954
- US-A1- 2008 095 906
- US-A1- 2011 256 199

## Description

### CROSS-REFERENCE TO RELATED APPLICATIONS

This application claims priority to US provisional application, Serial No. 61/985,658 filed on April 29, 2014.

### BACKGROUND

High intensity reaction flavors, which typically are low to moderate viscosity pastes, are often dried to facilitate their use (supply chain considerations, dosing, storage and stability, etc.) Traditionally, drying has been accomplished in one of two ways. The first is vacuum tray drying and the second is conventional spray drying. Both have benefits and limitations. EP-A-0 574 764 discloses drying of alkalised cocoa mass. US-A-3 879 561 discloses a method for preparing an edible condiment base composition possessing a meaty flavour. US-A-2008/0095906 discloses continuous thermal process for a flavour preparation. WO-A-97/00313 discloses a process for producing a high proof liquor. US-A-2006/0045954 discloses a process for enhancing the organoleptic properties of an imitation vanilla flavour containing composition.

The largest benefit of vacuum tray drying is that it can be done without a carrier thereby preparing a flavor with a high loading. See US Patent Nos. 8,137,504, 7,988,819, 8,137,724, 4,588,598, and 4,282,263. Among numerous limitations, vacuum tray drying often requires conditions such as a long time (*e.g.,* 24 hours) and a high temperature (*e.g.,* ≥290°C), both of which are detrimental to the quality and authenticity of the flavor. Further, vacuum try drying systems typically require large footprints and fairly long cycle times. In addition, there can be a significant amount of manual labor involved in loading and removing the trays and handling the product.

The largest benefit of Spray drying is that it is more cost effective than vacuum tray drying. The process can be carried out in a continuous manner and the amount of manual labor is reduced. One limitation of spray drying is that a significant amount of carrier is needed (*e.g.,* 40%) to successfully dry the product. See Prince et al., International Journal of Engineering Research and Development 10, 33-40 (2014). Without the carrier, the flavor typically builds up on the wall of the spray drier resulting in, at best, very poor yields, and at worst, an inability to dry the product. In addition, the carrier dilutes the flavor thereby reducing its intensity, authenticity, and character.

There is a need to develop a process for preparing a reaction flavor solid compositions that are highly concentrated and authentically tasting.

### SUMMARY

The invention is defined by the appended claims.

This invention is based on the discovery of a cost effective and expeditious method of preparing a reaction flavor composition that unexpectedly retains its authentic tasting.

Accordingly, one aspect of the invention relates to a method of preparing a reaction flavor composition comprising the following steps: (i) providing a reaction flavor mixture that contains 40% to 75% a reaction flavor and 25% to 60% water, (ii) drying the reaction flavor mixture in a thin-film evaporator under a vacuum of 75 to 180 mmHg (*e.g*., 80 to 100 mmHg) and at a product film temperature of 70 to 95 °C (*e.g.,* 80 to 85 °C) to obtain a molten reaction flavor having less than 10% (*e.g.,* 8% and 6%) water, and (iii) cooling the molten reaction flavor to obtain the reaction flavor composition as a solid.

The reaction flavor mixture is typically prepared by reacting an amino acid and reducing sugar, wherein the ratio between the amino acid and the reducing sugar is 10 : 1 to 1 : 10 (*e.g.,* 5 : 1 to 1 : 5 and 3 : 1 to 1 : 3). The reaction flavor mixture thus prepared has a viscosity of 5 to 500 centipoise ("cP") at the temperature of 25 °C.

Preferably, the reaction flavor composition has a glass transition temperature ("Tg") of 25 °C or higher (*e.g.,* 25 to 50 °C). More preferably, the Tg is 35 °C or higher (*e.g.,* 35 to 50 °C). In some embodiments, a carrier (0.5 to 25%) is added to the reaction flavor mixture so that the Tg of the final reaction flavor composition is raised to 25 °C or higher. Suitable carriers include sugars, sugar derivatives, modified starches, proteins, alcohols, celluloses, dextrins, gums, sugar polyols, peptides, acids, carbohydrates, hydrocolloids, silicon dioxide, and combinations thereof.

Optionally, the method of invention includes the following additional steps: (a) adjusting the pH of the reaction flavor mixture to 1.5 to 5 (*e.g.,* 2 to 2.5), (b) pre-heating the reaction flavor mixture after the pH adjustment to a temperature of 40 to 75 °C (*e.g.,* 65 to 70 °C) before drying; and (c) feeding the reaction flavor mixture after the pre-heating to a thin-film evaporator via a feed pump. The reaction flavor mixture is then dried in the thin-film evaporator for 0.5 to 3 minutes (*e.g.,* 0.5 to 1.5 minutes) before being extruded to obtain a molten reaction flavor having less than 8% water.

Further, the method of this invention can also include the steps of: (I) adding a liquid, gas or combination thereof to the molten reaction flavor prior to cooling; and (ii) grinding the solid reaction flavor composition to obtain a reaction flavor composition as a powder.

Another aspect of this invention relates to a reaction flavor composition prepared by any of the methods described above.

Also within the scope of this invention are consumable products containing a reaction flavor composition of this invention.

Exemplary consumable products are baked products, snack foods, cereal products, alcoholic and non-alcoholic beverages, spice blends, ready-to-heat foods, ready-to-eat meals, dairy products, meat products, seasoning preparations, ketchup, sauces, dried vegetables, soups, bouillon, noodles, frozen entrées, gravy, and desserts.

The details of one or more embodiments of the invention are set forth in the description below. Other features, objects, and advantages of the invention will be apparent from the description and the claims.

### BRIEF DESCRIPTION OF THE DRAWINGS

Figure 1 show a simplified process flow diagram of the reaction flavor evaporation process of the invention.
Figure 2 shows a simplified process flow diagram of the reaction flavor evaporation process of the invention with additional downstream capability.

### DETAILED DESCRIPTION

Reaction flavors are those generated as a result of chemical reactions between reducing sugars and amino acids or proteins. The reactions occur in water. Drying is crucial in obtaining a solid reaction flavor while maintaining the original aroma and flavor.

Traditionally, reaction flavors are tray dried or spray dried. Tray drying requires a long time at a high temperature, during which volatile compounds are lost and original flavors are changed. Spray drying uses a large amount of a carrier and prepares product having a low flavor loading (*e.g*., 10% or less).

It has now been found that reaction flavors can be dried, either directly (with no carrier) or with very small amounts of carrier, using a thin-film or polymer evaporator. This cost effective drying process can match or come close to matching the original flavor quality and authenticity.

A thin-film evaporator is an evaporator designed to handle very viscous materials, often with viscosities over one million centipoise (cP). Using a thin-film evaporator, it was observed that the flavor character of the reaction flavor was not significantly altered. As such, a flavor chemist or flavorist can now design reaction flavors knowing that the post drying process will not change the quality or character of the reaction flavor.

Accordingly, the present invention provides a method for drying a reaction flavor by evaporating a reaction flavor in a thin-film evaporator under vacuum at a temperature above the glass transition temperature of the reaction flavor to obtain a molten, dried reaction flavor with 10% or less water, cooling the dried reaction flavor to room temperature to obtain a solid and grinding and sieving the solid reaction flavor.

Any reaction flavor can be dried by the method described above. Examples include red meat, poultry, coffee, vegetables, bread crust and fire roasted notes. These flavors are typically developed when heating a mixture of starting materials such as carbohydrates, proteins, and fats for a period of time long enough to yield a desired profile. During the heating, there are chemical reactions occurred, e.g., Maillard reactions, Schiff base reactions, Strecker reactions and caramelization reactions, and/or other beneficial flavor reactions. The Maillard reaction is a non-enzymatic browning reaction of reducing sugars and amino acids in the presence of heat resulting in the generation of flavor.

Materials that can be used in the development of reaction flavors include, but are not limited to, lipids or fats, reducing sugars, free amino acids, alternate protein sources such as hydrolyzed vegetable proteins (HVPs) or Yeast autolysates and a small amount of water to initiate the reaction. In addition to these materials, there are additional materials that can modify the taste of the flavor. Meat powders, and powdered broths or stocks can add natural meaty taste. Thiamine can also contribute to the reaction to give a distinct finished flavor. Animal fats like chicken or pork can provide added mouth feel. Acids and bases can regulate the pH which will in turn affect the reaction and change the flavor. Vegetable juices can also be used to help round out the profile of the flavor. Spices, essential oils and other flavor enhancers can also play an important role in building wholesome processed flavor.

Suitable amino acids are natural or non-natural, standard or derivative. Examples include: Glycine, Alanine, Valine, Leucine, Isoleucine, Serine, Cysteine, Selenocysteine, Threonine, Methionine, Proline, Phenylalanine, Tyrosine, Tryptophan, Histidine, Lysine, Arginine, Aspartate, Glutamate, Asparagine, Glutamine, 5-hydroxytryptophan (5-HTP), L-dihydroxy-phenylalanine (L-DOPA), and Eflornithine.

Reducing sugars are those that either have an aldehyde group or are capable of forming one in solution through isomerism. The aldehyde group allows the sugar to act as a reducing agent in the Maillard reaction, important in the browning of many foods. Cyclic hemiacetal forms of aldoses can open to reveal an aldehyde and certain ketoses can undergo tautomerization to become aldoses. Examples of reducing sugars include: glucose, fructose, xylose, glyceraldehyde, galactose, lactose, arabinose, maltose, glucose polymers such as starch, hydrolyzed starch, and starch-derivatives like glucose syrup, maltodextrin, and dextrin.

The ratio between an amino acid and a reducing sugar can be 40:1 to 1 : 10 (*e.g.,* 20 : 1 to 1 : 5 and 12 : 1 to 1 : 2).

A typical reaction flavor is the product of: 25-60% water, 10-30% amino acids, 10-30% reducing sugars, 5-25% proteins, and 2-15% fat.

The pH of the reaction flavor mixture can be adjusted in the range of 0.5-8, preferably 1-7. Any food grade acids and bases can be used. Examples of the acids include lactic acid, phosphoric acid, acetic acid, citric acid, malic acid, tartric acid, oxalic acid, tannic acid, caffeotannic acid, benzoic acid, butyric acid, and combinations thereof. Examples of bases include sodium hydroxide, sodium carbonate, potassium bicarbonate, and sodium acetate.

Heating is typically another part of creating reaction flavors. Once the materials are combined they are heated to activate and allow the reaction to generate the flavor. Depending on how the process flavor is heated it works to mimic different types of cooking techniques, whether it be boiling, grilling, or roasting. The key factors to control during this step are the temperature and the time. The temperature must be controlled to ensure the right profile is created. If the temperature is too low, the flavor may not react enough or may not generate the desired roasted notes. However, if it is too high the taste may become overly roasted or burnt. Another factor in processing is time. If the reaction flavor is not heated long enough, the materials may not have a chance to fully react. This can cause the flavor to not be fully developed, but may also cause some off tastes due to the remaining unreacted materials. But the flavor should not be heated for too long, because this may cause too many roasted notes to develop which can overpower the other more subtle note. Any reaction flavor can be used in the methods of this invention. Some of the most common reaction flavors include red meat, poultry, vegetables, bread crust, chocolate, caramel, popcorn and fire roasted notes. Reaction flavors are described, e.g., US 2,934,436; US 3,316,099; US 3,394,017; US 3,620,772; US 4,604,290; US 5,039,543; WO 2002/063974; and CN 102613370.

In certain embodiments, the reaction flavor composition thus prepared contains a carrier, *e.g.,* starch or maltodextrin, which is less than 25% (*e.g.,* less than 20%, 15%, 10%, 5%, or 1%) of the dried reaction flavor composition. In other embodiments, the reaction flavor composition does not include a carrier.

In accordance with the present invention, the reaction flavor mixture (unconcentrated or liquid reaction flavor) is evaporated in a thin-film evaporator under vacuum at a temperature above the glass transition temperature (Tg) of the reaction flavor composition. The Tg of a reaction flavor composition can be readily determined by the skilled artisan by conventional methods, e.g., using differential scanning calorimetry (DSC) or mechanical spectroscopy (or dynamic mechanical thermal analysis (DMTA)). See, e.g., Bell & Touma, J. Food Sci. 61, 807-10 (1996) and Meste, et al., J. Food Sci. 67, 2444-58 (2002). The Tg is typically above a certain temperature so that the reaction flavor composition is a solid at room temperature. Preferably, Tg is above 10 °C (*e.g.,* above 20 °C, above 25 °C, 15 to 60 °C, and 20 to 50 °C). When the Tg of a reaction flavor is below 25 °C (*e.g.,* below 10 °C, 15 °C, and 20 °C), a carrier is added to increase the Tg so that the resultant reaction flavor composition is a solid or semisolid at room temperature.

A typical thin-film evaporator is configured with flow in one direction, e.g., the vertical direction (flow is top to bottom) or horizontal direction, and operates using a rotor under high torque that distributes a thin layer of the reaction flavor mixture in a spiral pattern along a heated wall. The rotors keep the reaction flavor mixture thin thereby enhancing heat transfer and water removal while propelling the flavor mixture through the evaporator. Desirably, the temperature is kept in the range of 25°C to 200°C or more preferably in the range of 50°C to 150°C.

A vacuum is maintained on the evaporator to minimize the temperature needed to remove water and maintain product quality. In certain embodiments, a vacuum of 0.05 to 0.5 atm (*e.g.,* 0.1 to 0.4 atm, 0.1 to 0.12 atm, and 0.12 to 0.24 atm) is applied. An exemplary thin-film evaporator of use in the instant method is produced by LCI Corporation (Charlotte, NC).

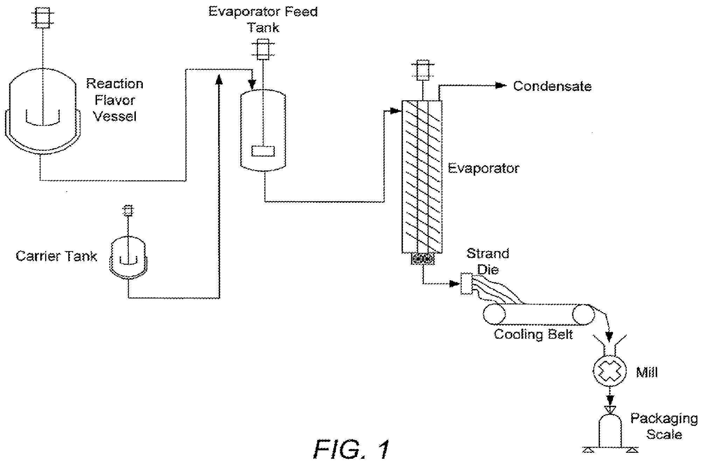

The dried reaction flavor composition exiting the evaporator has a water content of 10% or less. In certain embodiments, the dried reaction flavor has a water content of 4% to 10%. The dried reaction flavor is maintained in a molten state above its glass transition temperature (Tg) until it exits the evaporator and passes through an extrusion die. A high viscosity melt pump or gear pump is used to transfer the molten, dried reaction flavor through the extrusion die where the dried reaction flavor can be shaped into a thin glass, round strands, or other shapes. The material is then cooled to room temperature where it becomes a solid. The final product can be obtained by grinding to a desired particle size (*e.g.,* 50 to 500 µm and preferably 100 to 200 µm). A schematic, which includes components used in the instant method, is provided in Figure 1.

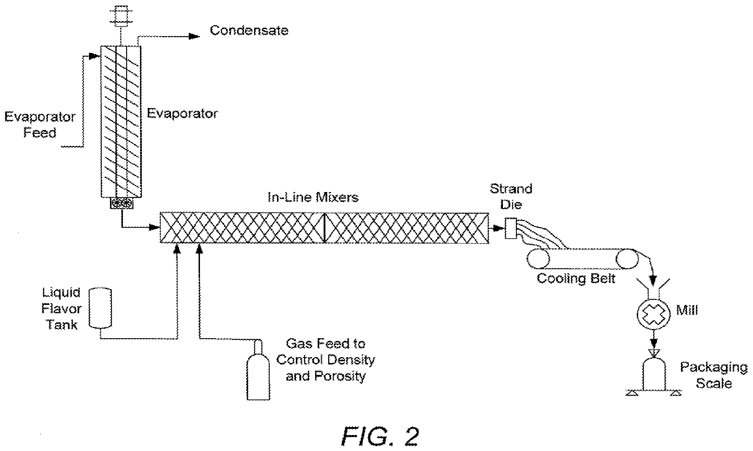

In a further embodiment, the method includes the addition of a liquid and/or gas to the molten, dried reaction flavor. A liquid feed system having a static mixer can be included after the melt pump to allow for the addition of liquid flavor materials to the molten, dried reaction flavor composition so that a more complete flavor profile product not currently available through either tray or spray drying. Similarly, a gaseous injection system can be included after the melt pump to allow for the addition of carbon dioxide, nitrogen or other gas to control the density and/or porosity of the product. The density control could be critical for dosing while the ability to manipulate porosity can lead to improved solubility and dissolution control. A schematic, which includes liquid and gaseous feed systems used in the instant method, is provided in Figure 2.

In a further embodiment, the method include a step of drying the reaction flavor composition after it is extruded from the thin-film evaporator, e.g., using a desiccant dryer. The extruded strands of the reaction flavor composition can pass through the desiccant drier which cools the strands and reduce the moisture content to a desired level (*e.g.,* less than 10 %).

The dried reaction flavor composition thus prepared can be used as a flavoring or flavorant in foods, dietary supplements, medicaments, or other comestible materials. For example, a flavoring or flavorant of the invention can be used to flavor soups and soup mixes, casserole dishes, canned and frozen human foods, animal or pet foods, sauces, gravies, stews, simulated meat products, meat spreads and dips, bakery products, replacements for beef, chicken, pork, fish and seafood extracts, and the like. More use examples are described in the Applications section below. The amount of a particular flavoring or flavorant employed will be dependent upon the specific application. Generally, an amount of 0.1 to 5% by weight of a flavoring or flavorant produced by the present invention and preferably, about 0.5 to 1% by weight is usually enough to impart a desirable flavor and aroma to the foodstuff.

### Carriers

Carriers are necessary in some reaction flavor to improve the Tg, density, porosity, processing productivity, or flavor intensity. Examples are sugars, sugar derivatives, modified starches, proteins, alcohols, celluloses, dextrins, gums, sugar polyols, peptides, acids, carbohydrates, hydrocolloids. Particular examples of suitable materials include sugars such as gum arabic, capsul, maltose, sucrose, glucose, lactose, levulose, trehalose, fructose, ribose, dextrose, isomalt, sorbitol, mannitol, xylitol, lactitol, maltitol, pentatol, arabinose, pentose, xylose, galactose; hydrogenated starch hydrolysates, inulin, oligosaccharides such as oligofructose; maltodextrins or dextrins (*i.e.,* soluble fiber); modified starch; sugar fruit gran; corn syrup solids; sugar white gran; hydrocolloids such as agar, gum acacia, modified gum acacia, sodium alginate, potassium alginate, ammonium alginate, calcium alginate or carrageenan; gums; polydextrose; celluloses such as sodium carboxymethylcellulose, enzymatically hydrolyzed carboxy methyl cellulose, methyl cellulose, hydroxypropyl cellulose and hydroxypropyl methyl cellulose; proteins such as gelatin, pea protein, soy and whey protein isolates and hydrolyzates, and sodium caseinates; silicon dioxide; and derivatives and mixtures thereof.

### Other Active Materials

Other active materials can be added to any of the above compositions in addition to reaction flavors. These materials include flavors, fragrance ingredients such as fragrance oils, taste masking agents, taste sensates, vitamins, dyes, colorants, pigments, anti-inflammatory agents, anesthetics, analgesics, anti-fungal agents, antibiotics, anti-viral agents, anti-parasitic agents, enzymes and co-enzymes, anti-histamines, and chemotherapeutic agents.

Examples of flavors that can be included are acetaldehyde, dimethyl sulfide, ethyl acetate, ethyl propionate, methyl butyrate, and ethyl butyrate. Flavors containing volatile aldehydes or esters include, e.g., cinnamyl acetate, cinnamaldehyde, citral, diethylacetal, dihydrocarvyl acetate, eugenyl formate, and p-methylanisole. Further examples of volatile compounds that may be present in the instant flavor oils include acetaldehyde (apple); benzaldehyde (cherry, almond); cinnamic aldehyde (cinnamon); citral, i.e., alpha citral (lemon, lime); neral, i.e., beta citral (lemon, lime); decanal (orange, lemon); ethyl vanillin (vanilla, cream); heliotropine, i.e., piperonal (vanilla, cream); vanillin (vanilla, cream); alpha-amyl cinnamaldehyde (spicy fruity flavors); butyraldehyde (butter, cheese); valeraldehyde (butter, cheese); citronellal (modifies, many types); decanal (citrus fruits); aldehyde C-8 (citrus fruits); aldehyde C-9 (citrus fruits); aldehyde C-12 (citrus fruits); 2-ethyl butyraldehyde (berry fruits); hexenal, i.e., trans-2 (berry fruits); tolyl aldehyde (cherry, almond); veratraldehyde (vanilla); 2,6-dimethyl-5-heptenal, i.e., melonal (melon); 2-6-dimethyloctanal (green fruit); and 2-dodecenal (citrus, mandarin); cherry; or grape and mixtures thereof. The delivery system may also contain taste modulators and artificial sweeteners. As used herein, flavor is understood to include spice oleoresins derived from allspice, basil, capsicum, cinnamon, cloves, cumin, dill, garlic, marjoram, nutmeg, paprika, black pepper, rosemary, and turmeric, essential oils, anise oil, caraway oil, clove oil, eucalyptus oil, fennel oil, garlic oil, ginger oil, peppermint oil, onion oil, pepper oil, rosemary oil, spearmint oil, citrus oil, orange oil, lemon oil, bitter orange oil, tangerine oil, alliaceous flavors, garlic, leek, chive, and onion, botanical extracts, arnica flower extract, chamomile flower extract, hops extract, marigold extract, botanical flavor extracts, blackberry, chicory root, cocoa, coffee, kola, licorice root, rose hips, sarsaparilla root, sassafras bark, tamarind and vanilla extracts, protein hydrolysates, hydrolyzed vegetable proteins, meat protein hydrolyzes, milk protein hydrolyzates and compounded flavors both natural and artificial including those disclosed in S. Heath, Source Book of Flavors, Avi Publishing Co., Westport Connecticut, 1981, pages 149-277. Specific preferred flavor adjuvants include, but are not limited to, the following: anise oil; ethyl-2-methyl butyrate; vanillin; cis-3-heptenol; cis-3-hexenol; trans-2-heptenal; butyl valerate; 2,3-diethyl pyrazine; methylcyclo-pentenolone; benzaldehyde; valerian oil; 3,4-dimeth-oxyphenol; amyl acetate; amyl cinnamate, y-butyryl lactone; furfural; trimethyl pyrazine; phenyl acetic acid; isovaleraldehyde; ethyl maltol; ethyl vanillin; ethyl valerate; ethyl butyrate; cocoa extract; coffee extract; peppermint oil; spearmint oil; clove oil; anethol; cardamom oil; wintergreen oil; cinnamic aldehyde; ethyl-2-methyl valerate; g-hexenyl lactone; 2,4-decadienal; 2,4-heptadienal; methyl thiazole alcohol (4-methyl-5-b-hydroxyethyl thiazole); 2-methyl butanethiol; 4-mercapto-2-butanone; 3-mercapto-2-pentanone; 1-mercapto-2-propane; benzaldehyde; furfural; furfuryl alcohol; 2-mercapto propionic acid; alkyl pyrazine; methyl pyrazine; 2-ethyl-3-methyl pyrazine; tetramethyl pyrazine; polysulfides; dipropyl disulfide; methyl benzyl disulfide; alkyl thiophene; 2,3-dimethyl thiophene; 5-methyl furfural; acetyl furan; 2,4-decadienal; guiacol; phenyl acetaldehyde; b-decalactone; d-limonene; acetoin; amyl acetate; maltol; ethyl butyrate; levulinic acid; piperonal; ethyl acetate; n-octanal; n-pentanal; n-hexanal; diacetyl; monosodium glutamate; monopotassium glutamate; sulfur-containing amino acids, e.g., cysteine; hydrolyzed vegetable protein; 2-methylfuran-3-thiol; 2-methyldihydrofuran-3-thiol; 2,5-dimethylfuran-3-thiol; hydrolyzed fish protein; tetramethyl pyrazine; propylpropenyl disulfide; propylpropenyl trisulfide; diallyl disulfide; diallyl trisulfide; dipropenyl disulfide; dipropenyl trisulfide; 4-methyl-2-[(methylthio)-ethyl]-1,3-dithiolane; 4,5-dimethyl-2-(methylthiomethyl)-1,3-dithiolane; and 4-methyl-2-(methylthiomethyl)-1,3-dithiolane. These and other flavor ingredients are provided in U.S. Patent Nos. 6,110,520 and 6,333,180.

Taste masking agents are substances for masking one or more unpleasant taste sensations, in particular a bitter, astringent and/or metallic taste sensation or aftertaste, which substances can be a constituent of the products according to the invention. Examples include lactisol [2-O-(4-methoxyphenyl) lactic acid] (cf. U.S. Pat. No. 5,045,336), 2,4-dihydroxybenzoic acid potassium salt (cf. U.S. Pat. No. 5,643,941), ginger extracts (cf. GB 2,380,936), neohesperidine dihydrochalcone (cf. Manufacturing Chemist 2000, July issue, p. 16-17), specific flavones (2-phenylchrom-2-en-4-ones) (cf. U.S. Pat. No. 5,580,545), specific nucleotides, for example cytidine-5'-monophosphates (CMP) (cf. US 2002/0177576), specific sodium salts, such as sodium chloride, sodium citrate, sodium acetate and sodium lactate (cf. Nature, 1997, Vol. 387, p. 563), a lipoprotein of β-lactoglobulin and phosphatidic acid (cf. EPA 635 218), neodiosmine [5,7-dihydroxy-2-(4-methoxy-3-hydroxyphenyl)-7-O-neohesperidosyl-chrom-2-en-4-one] (cf. U.S. Pat. No. 4,154,862), preferably hydroxyflavanones according to EP 1 258 200, in turn preferred in this respect 2-(4-hydroxyphenyl)-5,7-dihydroxychroman-4-one (naringenin), 2-(3,4-dihydroxyphenyl)-5,7-dihydroxychroman-4-one (eriodictyol), 2-(3,4-dihydroxyphenyl)-5-hydroxy-7-methoxychroman-4-one (eriodictyol-7-methylether), 2-(3,4-dihydroxyphenyl)-7-hydroxy-5-methoxychroman-4-one (eriodictyol-5-methylether) and 2-(4-hydroxy-3-methoxyphenyl)-5,7-dihydroxychroman-4-one (homoeriodictyol), the (2S)- or (2R)-enantiomers thereof or mixtures thereof as well as the mono- or polyvalent phenolate salts thereof with Na⁺, K⁺, NH⁴⁺, Ca²⁺, Mg²⁺ or Al³⁺ as counter cations or γ-aminobutyric acid (4-aminobutyric acid, as the neutral form ("inner salt") or in the carboxylate or ammonium form) according to WO 2005/096841.

Taste sensates include hot tasting, salivation-inducing substances, substances causing a warmth or tingling feeling, and cooling active ingredients.

Examples of hot tasting and/or salivation-inducing substances and/or substances which cause a feeling of warmth and/or a tingling feeling on the skin or on the mucous membranes and which can be a constituent of the products according to the invention are: capsaicin, dihydrocapsaicin, gingerol, paradol, shogaol, piperine, carboxylic acid-N-vanillylamides, in particular nonanoic acid-N-vanillylamide, pellitorin or spilanthol, 2-nonanoic acid amides, in particular 2-nonanoic acid-N-isobutylamide, 2-nonanoic acid-N-4-hydroxy-3-methoxyphenylamide, alkyl ethers of 4-hydroxy-3-methoxybenzyl alcohol, in particular 4-hydroxy-3-methoxybenzyl-n-butylether, alkyl ethers of 4-acyloxy-3-methoxybenzyl alcohol, in particular 4-acetyloxy-3-methoxybenzyl-n-butylether and 4-acetyloxy-3-methoxybenzyl-n-hexylether, alkyl ethers of 3-hydroxy-4-methoxybenzyl alcohol, alkyl ethers of 3,4-dimethoxybenzyl alcohol, alkyl ethers of 3-ethoxy-4-hydroxybenzyl alcohol, alkyl ethers of 3,4-methylene dioxybenzyl alcohol, (4-hydroxy-3-methoxyphenyl)acetic acid amides, in particular (4-hydroxy-3-methoxyphenyl)acetic acid-N-n-octylamide, vanillomandelic acid alkylamides, ferulic acid-phenethylamides, nicotinaldehyde, methylnicotinate, propylnicotinate, 2-butoxyethylnicotinate, benzylnicotinate, 1-acetoxychavicol, polygodial and isodrimeninol, further preferred cis- and/or trans-pellitorin according to WO 2004/000787 or WO 2004/043906, alkenecarboxylic acid-N-alkylamides according to WO 2005/044778, mandelic acid alkylamides according to WO 03/106404 or alkyloxyalkanoic acid amides according to WO 2006/003210. Examples of preferred hot tasting natural extracts and/or natural extracts which cause a feeling of warmth and/or a tingling feeling on the skin or on the mucous membranes and which can be a constituent of the products according to the invention are: extracts of paprika, extracts of pepper (for example capsicum extract), extracts of chili pepper, extracts of ginger roots, extracts of Aframomum melgueta, extracts of Spilanthes-acmella, extracts of Kaempferia galangal or extracts of Alpinia galanga.

Suitable cooling active ingredients include the following: 1-menthol, d-menthol, racemic menthol, menthone glycerol acetal (trade name: Frescolat.RTM.MGA), menthyl lactate (trade name: Frescolat.RTM.ML, menthyl lactate preferably being l-menthyl lactate, in particular 1-menthyl-l-lactate), substituted menthyl-3-carboxamides (for example menthyl-3-carboxylic acid-N-ethylamide), 2-isopropyl-N-2,3-trimethyl-butanamide, substituted cyclohexane carboxamides, 3-menthoxypropane-1,2-diol, 2-hydroxyethyl menthyl carbonate, 2-hydroxypropyl menthyl carbonate, N-acetylglycine menthyl ester, isopulegol, hydroxycarboxylic acid menthyl esters (for example menthyl-3-hydroxybutyrate), monomenthyl succinate, 2-mercaptocyclodecanone, menthyl-2-pyrrolidin-5-onecarboxylate, 2,3-dihydroxy-p-menthane, 3,3,5-trimethylcyclohexanone glycerol ketal, 3-menthyl-3,6-di- and -trioxaalkanoates, 3-menthyl methoxyacetate and icilin. Cooling active ingredients which are particularly preferred are as follows: 1-menthol, racemic menthol, menthone glycerol acetal (trade name: Frescolat.RTM.MGA), menthyl lactate (preferably 1-menthyl lactate, in particular l-menthyl-l-lactate, trade name: Frescolat.RTM.ML), 3-menthoxypropane-1,2-diol, 2-hydroxyethyl menthyl carbonate, 2-hydroxypropyl menthyl carbonate.

Vitamins include any vitamin, a derivative thereof and a salt thereof. Examples are as follows: vitamin A and its analogs and derivatives (e.g., retinol, retinal, retinyl palmitate, retinoic acid, tretinoin, and iso-tretinoin, known collectively as retinoids), vitamin E (tocopherol and its derivatives), vitamin C (L-ascorbic acid and its esters and other derivatives), vitamin B3 (niacinamide and its derivatives), alpha hydroxy acids (such as glycolic acid, lactic acid, tartaric acid, malic acid, citric acid, etc.) and beta hydroxy acids (such as salicylic acid and the like).

The products according to the invention can contain, for example, the following dyes, colorants or pigments: lactoflavin (riboflavin), beta-carotene, riboflavin-5'-phosphate, alpha-carotene, gamma-carotene, cantaxanthin, erythrosine, curcumin, quinoline yellow, yellow orange S, tartrazine, bixin, norbixin (annatto, orlean), capsanthin, capsorubin, lycopene, beta-apo-8'-carotenal, beta-apo-8'-carotenic acid ethyl ester, xantophylls (flavoxanthin, lutein, cryptoxanthin, rubixanthin, violaxanthin, rodoxanthin), fast carmine (carminic acid, cochineal), azorubin, cochineal red A (Ponceau 4 R), beetroot red, betanin, anthocyanins, amaranth, patent blue V, indigotine I (indigo-carmine), chlorophylls, copper compounds of chlorophylls, acid brilliant green BS (lissamine green), brilliant black BN, vegetable carbon, titanium dioxide, iron oxides and hydroxides, calcium carbonate, aluminum, silver, gold, pigment rubine BK (lithol rubine BK), methyl violet B, victoria blue R, victoria blue B, acilan brilliant blue FFR (brilliant wool blue FFR), naphthol green B, acilan fast green 10 G (alkali fast green 10 G), ceres yellow GRN, sudan blue II, ultramarine, phthalocyanine blue, phthalocayanine green, fast acid violet R. Further naturally obtained extracts (for example paprika extract, black carrot extract, red cabbage extract) can be used for coloring purposes. Goods results are also achieved with the colors named in the following, the so-called aluminum lakes: FD & C Yellow 5 Lake, FD & C Blue 2 Lake, FD & C Blue 1 Lake, Tartrazine Lake, Quinoline Yellow Lake, FD & C Yellow 6 Lake, FD & C Red 40 Lake, Sunset Yellow Lake, Carmoisine Lake, Amaranth Lake, Ponceau 4R Lake, Erythrosyne Lake, Red 2G Lake, Allura Red Lake, Patent Blue V Lake, Indigo Carmine Lake, Brilliant Blue Lake, Brown HT Lake, Black PN Lake, Green S Lake and mixtures thereof.

Anti-inflammatory agents include, e.g., methyl salicylate, aspirin, ibuprofen, and naproxen. Additional anti-inflammatories useful in topical applications include corticosteroids, such as, but not limited to, flurandrenolide, clobetasol propionate, halobetasol propionate, fluticasone propionate, betamethasone dipropionate, betamethasone benzoate, betamethasone valerate, desoximethasone, dexamethasone, diflorasone diacetate, mometasone furoate, amcinodine, halcinonide, fluocinonide, fluocinolone acetonide, desonide, triamcinolone acetonide, hydrocortisone, hydrocortisone acetate, fluoromethalone, methylprednisolone, and predinicarbate.

Anesthetics that can be delivered locally include benzocaine, butamben, butamben picrate, cocaine, procaine, tetracaine, lidocaine and pramoxine hydrochloride.

Suitable analgesics include, but are not limited to, ibuprofen, diclofenac, capsaicin, and lidocaine.

Non-limiting examples of anti-fungal agents include micanazole, clotrimazole, butoconazole, fenticonasole, tioconazole, terconazole, sulconazole, fluconazole, haloprogin, ketonazole, ketoconazole, oxinazole, econazole, itraconazole, torbinafine, nystatin and griseofulvin.

Non-limiting examples of antibiotics include erythromycin, clindamycin, synthomycin, tetracycline, metronidazole and the like.

Exemplary antibacterials include bisguanidines (e.g., chlorhexidine digluconate), diphenyl compounds, benzyl alcohols, trihalocarbanilides, quaternary ammonium compounds, ethoxylated phenols, and phenolic compounds, such as halo-substituted phenolic compounds, like PCMX (i.e., p-chloro-m-xylenol), triclosan (i.e., 2 , 4, 4 ' -trichloro-2 ' hydroxydiphenylether), thymol, and triclocarban.

Examples of antioxidants include beta-carotene, vitamin C (Ascorbic Acid) or an ester thereof, vitamin A or an ester thereof, vitamin E or an ester thereof, lutein or an ester thereof, lignan, lycopene, selenium, flavonoids, vitamin-like antioxidants such as coenzyme Q10 (CoQ10) and glutathione, and antioxidant enzymes such as superoxide dismutase (SOD), catalase, and glutathione peroxidase.

Anti-viral agents include, but are not limited to, famcyclovir, valacyclovir and acyclovir.

Examples of enzymes and co-enzymes useful for topical application include co-enzyme Q10, papain enzyme, lipases, proteases, superoxide dismutase, fibrinolysin, desoxyribonuclease, trypsin, collagenase and sutilains.

Anti-histamines include, but are not limited to, chlorpheniramine, brompheniramine, dexchlorpheniramine, tripolidine, clemastine, diphenhydramine, prometazine, piperazines, piperidines, astemizole, loratadine and terfonadine.

Non-limiting examples of chemotherapeutic agents include 5-fluorouracil, masoprocol, mechlorethamine, cyclophosphamide, vincristine, chlorambucil, streptozocin, methotrexate, bleomycin, dactinomycin, daunorubicin, coxorubicin and tamoxifen.

In some embodiments, the amount of the additional active material is from 0.1% to 50% (e.g., 0.2 to 40%, 0.3 to 30%, 0.4 to 20%, and 0.5 to 10%) by weight of the reaction flavor composition.

### Applications

The reaction flavor compositions of the present invention are well-suited for use, without limitation, in the following products:
a) Confectioneries, preferably selected from the group consisting of chocolate, chocolate bar products, other products in bar form, fruit gums, hard and soft caramels and chewing gum
   i. Gum
      1. Gum base (natural latex chicle gum, most current chewing gum bases also presently include elastomers, such as polyvinylacetate (PVA), polyethylene, (low or medium molecular weight) polyisobutene (PIB), polybutadiene, isobutene-isoprene copolymers (butyl rubber), polyvinylethylether (PVE), polyvinylbutyether, copolymers of vinyl esters and vinyl ethers, styrene-butadiene copolymers (styrene-butadiene rubber, SBR), or vinyl elastomers, for example based on vinylacetate/vinyllaurate, vinylacetate/vinylstearate or ethylene/vinylacetate, as well as mixtures of the mentioned elastomers, as described for example in EP 0 242 325, U.S. Pat. No. 4,518,615, U.S. Pat. No. 5,093,136, U.S. Pat. No. 5,266,336, U.S. Pat. No. 5,601,858 or U.S. Pat. No. 6,986,709.) 20-25%
      2. Powdered sugar 45-50%
      3. glucose 15-17%
      4. starch syrup 10-13%
      5. plasticizer 0.1%
      6. flavor 0.8-1.2%
      The components described above were kneaded by a kneader according to the foregoing formulation to provide a chewing gum. Encapsulated Flavor or sensate is then added and blended till homogeneous.
   ii. Breath Fresheners
   iii. Orally Dissolvable Strips
   iv. Chewable Candy
   v. Hard Candy
b) Baked products, preferably selected from the group consisting of bread, dry biscuits, cakes and other cookies;
c) snack foods, preferably selected from the group consisting of baked or fried potato chips or potato dough products, bread dough products and corn or peanut-based extrudates;
   i. Potato, tortilla, vegetable or multigrain chips
   ii. Popcorn
   iii. Pretzels
   iv. Extruded stacks
d) Cereal Products preferably selected from the group consisting of breakfast cereals, muesli bars and precooked finished rice products
e) Alcoholic and non-alcoholic beverages, preferably selected from the group consisting of coffee, tea, wine, beverages containing wine, beer, beverages containing beer, liqueurs, schnapps, brandies, sodas containing fruit, isotonic beverages, soft drinks, nectars, fruit and vegetable juices and fruit or vegetable preparations; instant beverages, preferably selected from the group consisting of instant cocoa beverages, instant tea beverages and instant coffee beverages
   i. Ready to drink liquid drinks including carbonated or non-carbonated beverages
   ii. Liquid Drink Concentrates
   iii. Powder Drinks
   iv. Coffee: Instant Cappucino
      1. Sugar 30-40%
      2. Milk Powder 24-35%
      3. Soluble Coffee 20-25%
      4. Lactose 1-=15%
      5. Food Grade Emulsifier 1-3%
      6. Encapsulated Volatile Flavor .01-0.5%
   v. Tea
   vi. Alcoholic
f) Spice blends and consumer prepared foods
   i. Powder gravy, sauce mixes
   ii. Condiments
   iii. Fermented Products
g) Ready-to-heat foods: ready meals and soups, preferably selected from the group consisting of powdered soups, instant soups, precooked soups
   i. Soups
   ii. Sauces
   iii. Stews
   iv. Frozen entrees
   v. Bouillon including bouillon soups, cubes, and jellies
h) Dairy Products milk products, preferably selected from the group consisting of milk beverages, ice milk, yogurt, kefir, cream cheese, soft cheese, hard cheese, powdered milk, whey, butter, buttermilk and partially or fully hydrolyzed milk protein-containing products Flavored milk beverages
   i. Yoghurt
   ii. Ice cream
   iii. Bean Curd
   iv. Cheese
i) Soya protein or other soybean fractions, preferably selected from the group consisting of soya milk and products produced therefrom, soya lecithin-containing preparations, fermented products such as tofu or tempeh or products produced therefrom and soy sauces;
j) meat products, preferably selected from the group consisting of ham, fresh or raw sausage preparations, and seasoned or marinated fresh or salt meat products
k) Eggs or egg products, preferably selected from the group consisting of dried egg, egg white and egg yolk
l) and oil-based products or emulsions thereof, preferably selected from the group consisting of mayonnaise, remoulade, dressings and seasoning preparations
m) fruit preparations, preferably selected from the group consisting of jams, sorbets, fruit sauces and fruit fillings; vegetable preparations, preferably selected from the group consisting of ketchup, sauces, dried vegetables, deep-frozen vegetables, precooked vegetables, vegetables in vinegar and preserved vegetables.

The above-listed applications are all well known in the art.

All parts, percentages and proportions refer to herein and in the claims are by weight unless otherwise indicated.

The values and dimensions disclosed herein are not to be understood as being strictly limited to the exact numerical values recited. Instead, unless otherwise specified, each such value is intended to mean both the recited value and a functionally equivalent range surrounding that value. For example, a value disclosed as "50%" is intended to mean "about 50%."

The term "polymer" includes oligomers having 2-10 repeated units and macromolecules having 11 or more repeated units.

The invention is described in greater detail by the following non-limiting examples.

### EXAMPLE 1

A reaction flavor composition of this invention, *i.e.,* Composition 1, was prepared following the procedure described below.

### Preparation of A reaction flavor mixture

In a pressure reactor, the following ingredients were mixed: water (275 g), a chicken broth frozen 32 PCT solid (commercially available from International Flavors and Fragrances, South Brunswick, NJ; 350 g), amino acids (140 g containing cysteine), reduced alcohols (110 g containing dextrose), sodium hydroxide (30 g), and chicken fat (20 g).

The mixture was heated at 105 °C for 60 minutes and cooled to obtain a reaction flavor mixture, which was then stored in a refrigerator.

### Drying

The pH of the reaction flavor mixture prepared above was adjusted to 2 using phosphoric acid. The mixture was loaded to a feed tank and pre-heated to 71 °C (160F) before feeding to a thin film evaporator, *i.e.,* a 1 square foot Artisan Rototherm System.

The evaporator was dried initially at a vacuum of 0.65 atmosphere ("atm", *i.e.,* 494 mmHg) and a temperature of 120 °C system jacket temperature. The reaction flavor mixture was then fed into the evaporator via a peristaltic pump at a rate of 260 mL/minutes. Immediately after the feed reached the evaporator, the pressure in the drying chamber of the evaporator was reduced to 0.1-0.5 atm and the temperature was raised to 130 °C (the system jacket temperature. These drying conditions allow concentrated materials to reach a high enough viscosity so that downstream discharge pump could create an internal wet seal. If the viscosity is not high enough or the material is not concentrated enough, the discharge pump will not be able to create a wet seal against internal vacuum. The internal temperature reached to 80-85 °C in the product drying surface. After staying in the evaporator for 0.1 to 15 minutes (*e.g.,* 0.2 to 10 minutes, 0.3 to 5 minutes, and 0.5 to 3 minutes), the dried reaction flavor composition was extruded via a discharge pump immediately followed by a stranding die at a temperature of 70-75 °C.

The strands was then collected and received onto a cooling belt, followed by a coarse milling to 200-250 µm particle size, a post process drying (*e.g.,* through a desiccant dryer installed on the cooling belt) further decreasing the product moisture from 5-10% down to 1-3%, and then a final fine milling to 100-150 µm particle size to obtain Composition 1.

### EXAMPLES 2 AND 3

Two more compositions, *i.e.,* Compositions 2 and 3, were prepared following the same procedure as Composition 1 described above except that a different broth was used to prepare each composition.

In preparation of Composition 2, a BBQ flavor solid was used instead of the chicken broth solid.

In preparation of Composition 3, a Swanson Beef broth solid was used instead of the chicken broth solid.

### COMPARATIVE EXAMPLES

Three comparative compositions, *i.e.,* Comparative Compositions 2', 2", and 3', were also prepared using the same reaction flavor mixture as Compositions 2 and 3, respectively.

In Comparative Composition 2', a BBQ reaction flavor mixture was tray dried.

In Comparative Composition 2", a BBQ reaction flavor mixture was spray dried.

In Comparative Composition 3', a Swanson Beef reaction flavor mixture was tray dried.

### EXAMPLE 4: Comparison of Chicken Preparations

The taste of Composition 1 prepared in accordance with the method of the invention was compared with Chicken Paste and Spray Dried Chicken prepared by conventional methods.

Sample 1 was prepared using Composition of this invention, and Comparative Samples 1' and 1" were prepared using, respectively, Chicken Paste and Spraying Dried Chicken (both commercially available from International Flavors and Fragrances, Union Beach, New Jersey). The active flavor load was 0.1% in each sample.

Sample 1 and the two comparative samples were evaluated by a trained panel. The results are presented in Table 1 below.

**TABLE 1**

| Sample 1 | Comparative Sample 1' | Comparative Sample 1" |
|---|---|---|
| -Representative of paste, more concentrated | -Less concentrated than the milled | -Extremely weak with very bland characteristics |
| -Two times or greater in strength | -Aged taste | |
| -Fresher tasting than paste | -More sulfur notes | |
| -More Complex | | |
| -Authentic | | |
| -Higher Intensity | | |
| -Greater Mouthfeel | | |
| -Fatty notes | | |

This analysis indicated that Sample 1 containing Composition 1 of this invention was the best tasting and most preferred product as compared to product containing Chicken Paste and Spray Dried products.

Comparable levels of Sample 1, Chicken Paste and Spray Dried Chicken were subsequently compared. These results are presented in Table 2.

**TABLE 2**

| Sample 1 | Comparative Sample 1' | Comparative Sample 1" |
|---|---|---|
| -Comparable to Chicken Paste at 0.2% | -Similar in strength to Sample 1, but not preferred over Sample 1 | -Carrier coming through in taste |
| -Comparable to Spray Dried Chicken at 0.3% | | -Fake chicken taste |
| -Far superior to Chicken Paste and Spray Dried Chicken | | -Yeasty |
| -Most liked product | | -Flat |
| | | -No mouthfeel |
| | | -Powdery |
| | | -Onion note |
| | | -Phenolic |
| | | -Significant change in flavor |
| | | -Lacking in overall profile and mouthfeel. |

Sample 1 again outperformed the two comparative products containing the Paste or the Spray Dried versions.

### EXAMPLE 5: Comparison with Tray Dried and Spray Dried Products

Compositions 2 and 3 were compared with Tray Dried and Spray Dried products.

Sample 2 was prepared as BBQ flavored potato chips using Composition 2 at a load of 0.3%. More specifically, Pringles potato chips (commercially available from Kellogg's, Battle Creek, Michigan; lightly salted without any flavor added), were coarsely crushed and sieved through a #7 sieve, and again a #16 sieve. The powders remaining in the #16 sieve was collected, to which Composition 2 (0.3% by weight of the final product) was added and mixed by shaking vigorously in a bag to obtain Sample 2.

Sample 3 was prepared by mixing Composition 3 with Swanson Beef Broth (commercially available from Campbell Soup Company, Camden, New Jersey). More specifically, unsalted Swanson Beef Broth was mixed with water at a ratio of 1 : 1 to obtain a diluted beef broth. Composition 3 (0.1% by weight of the final product) was added to the diluted beef broth and mixed well to give Sample 3.

Comparative Sample 2' and 2" were prepared following the same procedure as Sample 2 except that Comparative Composition 2' and 2" were used, respectively, at an active flavor load at 0.3%.

Samples 2 and 3 and the three comparative samples were tasted by a panel of 12 screened and trained panelists.

The attributes of the tastes were rated by a score of 1-10. A score of 1 indicates an attribute of the taste is barely detectable, a scale of 6 indicates a moderate taste, and a scale of 10 indicates a strong taste.

Sample 2 showed a sweetness scored at 3.3 and a umami/savory flavor scored at 3.7. As a comparison, Comparative Sample 2' had a sweetness of 2.7 and a umami/savory flavor of 3. Note that both sweetness and umami flavor are desired for BBQ flavors. The results showed that Sample 2 of this invention had a taste unexpectedly better than comparative samples prepared from a tray tried composition.

Further, Sample 2 had a charcoal/burnt flavor scored at 3.3 and a bitterness score of 3.3. Comparative Sample 2" had a charcoal/burnt flavor of 2.4 and a bitterness of 2.4. Charcoal/burnt flavor and some degree of bitterness are also desirable attributes for BBQ flavors. The results indicated that Sample 2 of this invention had a taste unexpectedly better than the comparative sample prepared from a spray dried composition.

Sample 3 had an overall beef aroma scored at 4.3, an overall beef flavor scored at 4.1. By contrast, Comparative Sample 3' had an overall beef aroma of 3.8 and an overall beef flavor of 3.6. The results showed that Sample 3 of this invention had a taste unexpected better than the comparative sample prepared from a tray dried composition.

### OTHER EMBODIMENTS

All of the features disclosed in this specification may be combined in any combination. Each feature disclosed in this specification may be replaced by an alternative feature serving the same, equivalent, or similar purpose. Thus, unless expressly stated otherwise, each feature disclosed is only an example of a generic series of equivalent or similar features.

Indeed, to prepare a reaction flavor composition, one skilled in the art can select suitable starting material and choose drying temperature, vacuum, and time to obtain desirable authentic flavors.

## Claims

1. A method of preparing a reaction flavor composition comprising:
providing a reaction flavor mixture that contains 40% to 75% a reaction flavor and 25% to 60% water,
drying the reaction flavor mixture in a thin-film evaporator under a vacuum of 75 to 180 mmHg and at a product film temperature of 70 to 95 °C to obtain a molten reaction flavor having less than 10% water, and
cooling the molten reaction flavor to obtain the reaction flavor composition as a solid.

2. The method of claim 1, wherein the reaction flavor composition has a glass transition temperature of 25 °C or higher.

3. The method of claim 2, further comprising the steps of:
adjusting the pH of the reaction flavor mixture to 1.5 to 5;
pre-heating the reaction flavor mixture after the pH adjustment to a temperature of 40 to 75 °C before drying; and
feeding the reaction flavor mixture after the pre-heating to a thin-film evaporator via a feed pump,
wherein the reaction flavor mixture is dried in the thin-film evaporator under a vacuum of 75 to 180 mmHg and at a product film temperature of 70 to 95 °C for 0.5 to 3 minutes to obtain a molten reaction flavor having less than 8% water.

4. The method of claim 3, wherein the pH of the reaction flavor mixture is adjusted to 2 to 2.5, the temperature of the reaction flavor mixture is pre-heated to 65 to 70 °C, and the reaction flavor mixture is dried in the thin-film evaporator under a vacuum of 80 to 100 mmHg and at a product film temperature of 80 to 85 °C for 0.5 to 1.5 minutes to obtain a molten reaction flavor having less than 6% water.

5. The method of claim 2, wherein the reaction flavor composition has a glass transition temperature of 35 °C or higher.

6. The method of claim 5, further comprising the steps of:
adjusting the pH of the reaction flavor mixture to 1.5 to 5;
pre-heating the reaction flavor mixture after the pH adjustment to a temperature of 40 to 75 °C before drying; and
feeding the reaction flavor mixture after the pre-heating to a thin-film evaporator via a feed pump,
wherein the reaction flavor mixture is dried in the thin-film evaporator under a vacuum of 75 to 180 mmHg and at a product film temperature of 70 to 95 °C for 0.5 to 3 minutes to obtain a molten reaction flavor having less than 8% water.

7. The method of claim 6, wherein the pH of the reaction flavor mixture is adjusted to 2 to 2.5, the temperature of the reaction flavor mixture is pre-heated to 65 to 70 °C, and the reaction flavor mixture is dried in the thin-film evaporator under a vacuum of 80 to 180 mmHg and at a product film temperature of 80 to 85 °C for 0.5 to 1.5 minutes to obtain a molten reaction flavor having less than 6% water.

8. The method of claim 1, further comprising the step of adjusting the pH of the reaction flavor mixture to 1.5 to 5, and optionally or preferably, wherein the pH of the reaction flavor mixture is adjusted to 2 to 2.5.

9. The method of claim 3, or the method of claim 4, or the method of claim 6 or the method of claim 7, or the method of claim 8, wherein the reaction flavor mixture further contains 0.5% to 25% a carrier.

10. The method of claim 9, wherein the carrier is a sugar, sugar derivative, modified starch, protein, alcohol, cellulose, dextrin, gum, sugar polyol, peptide, acid, carbohydrate, hydrocolloid, silicon dioxide, or combination thereof.

11. The method of claim 10, further comprising the steps of:
adding a liquid, gas or combination thereof to the molten reaction flavor prior to cooling; and
grinding the solid reaction flavor composition to obtain a reaction flavor composition as a powder.

12. The method of claim 1, further comprising a step of heating the reaction flavor mixture to a temperature of 40 to 75 °C before drying; and
optionally or preferably wherein the reaction flavor mixture is pre-heated to a temperature 65 to 70 °C before drying.

13. The method of claim 1, further comprising the step of grinding the solid reaction flavor composition to obtain a reaction flavor composition as a powder.

14. The method of claim 1, further comprising the step of adding a liquid, gas or combination thereof to the molten reaction flavor prior to cooling.

15. The method of claim 1, wherein the reaction flavor mixture is prepared by reacting an amino acid and a reducing sugar, wherein the ratio between the amino acid and the reducing sugar is between 10 : 1 to 1 : 10.

16. The method of claim 1, wherein the reaction flavor mixture has a viscosity of 5 to 500 cP at 25 °C.

17. A reaction flavor composition prepared by the method of claim 1.

18. A consumable product containing a reaction flavor composition of claim 17.

19. The consumable product of claim 18, wherein the consumable product is a baked product, snack food, cereal product, alcoholic and non-alcoholic beverage, spice blend, ready-to-heat food, dairy product, meat product, seasoning preparation, ketchup, sauce, or dried vegetable; or
wherein the consumable product is a soup, bouillon, noodle, frozen entrée, snack, seasoning preparation, gravy, dessert, or ready-to-eat meal.

## Patentansprüche

1. Verfahren zur Herstellung einer Reaktionsaromazusammensetzung, umfassend:
Bereitstellen einer Reaktionsaromamischung, die 40 % bis 75 % eines Reaktionsaromas und 25 % bis 60 % Wasser enthält,
Trocknen der Reaktionsaromamischung unter Vakuum von 75 bis 180 mmHg und mit einer Produktfilmtemperatur von 70 bis 95 °C, um ein geschmolzenes Reaktionsaroma mit weniger als 10 % Wasser zu erhalten, und
Kühlen des geschmolzenen Reaktionsaromas, um die Reaktionsaromazusammensetzung als Feststoff zu erhalten.

2. Verfahren nach Anspruch 1, wobei die Reaktionsaromazusammensetzung eine Glasübergangstemperatur von 25 °C oder höher aufweist.

3. Verfahren nach Anspruch 2, ferner umfassend die folgenden Schritte:
Einstellen des pH-Werts der Reaktionsaromamischung auf 1,5 bis 5;
Vorheizen der Reaktionsaromamischung nach der pH-Einstellung auf eine Temperatur von 40 bis 75 °C vor dem Trocknen; und
Einspeisen der Reaktionsaromamischung in einen Dünnfilmverdampfer über eine Beschickungspumpe nach dem Vorheizen,
wobei die Reaktionsaromamischung in dem Dünnfilmverdampfer unter einem Vakuum von 75 bis 180 mmHg und mit einer Produktfilmtemperatur von 70 bis 95 °C für 0,5 bis 3 Minuten getrocknet wird, um ein geschmolzenes Reaktionsaroma mit weniger als 8 % Wasser zu erhalten.

4. Verfahren nach Anspruch 3, wobei der pH-Wert der Reaktionsaromamischung auf 2 bis 2,5 eingestellt wird, die Temperatur der Reaktionsaromamischung auf 65 bis 70 °C vorgeheizt wird, und die Reaktionsaromamischung in dem Dünnfilmverdampfer unter einem Vakuum von 80 bis 100 mmHg und mit einer Produktfilmtemperatur von 80 bis 85 °C für 0,5 bis 1,5 Minuten getrocknet wird, um ein geschmolzenes Reaktionsaroma mit weniger als 6 % Wasser zu erhalten.

5. Verfahren nach Anspruch 2, wobei die Reaktionsaromazusammensetzung eine Glasübergangstemperatur von 35 °C oder höher aufweist.

6. Verfahren nach Anspruch 5, ferner umfassend die folgenden Schritte:
Einstellen des pH-Werts der Reaktionsaromamischung auf 1,5 bis 5;
Vorheizen der Reaktionsaromamischung nach der pH-Einstellung auf eine Temperatur von 40 bis 75 °C vor dem Trocknen; und
Einspeisen der Reaktionsaromamischung in einen Dünnfilmverdampfer über eine Beschickungspumpe nach dem Vorheizen,
wobei die Reaktionsaromamischung in dem Dünnfilmverdampfer unter einem Vakuum von 75 bis 180 mmHg und mit einer Produktfilmtemperatur von 70 bis 95 °C für 0,5 bis 3 Minuten getrocknet wird, um ein geschmolzenes Reaktionsaroma mit weniger als 8 % Wasser zu erhalten.

7. Verfahren nach Anspruch 6, wobei der pH-Wert der Reaktionsaromamischung auf 2 bis 2,5 eingestellt wird, die Temperatur der Reaktionsaromamischung auf 65 bis 70 °C vorgeheizt wird, und die Reaktionsaromamischung in dem Dünnfilmverdampfer unter einem Vakuum von 80 bis 180 mmHg und mit einer Produktfilmtemperatur von 80 bis 85 °C für 0,5 bis 1,5 Minuten getrocknet wird, um ein geschmolzenes Reaktionsaroma mit weniger als 6 % Wasser zu erhalten.

8. Verfahren nach Anspruch 1, ferner umfassend den Schritt des Einstellens des pH-Werts der Reaktionsaromamischung auf 1,5 bis 5 und wobei gegebenenfalls oder vorzugsweise der pH-Wert der Reaktionsaromamischung auf 2 bis 2,5 eingestellt wird.

9. Verfahren nach Anspruch 3 oder Verfahren nach Anspruch 4 oder Verfahren nach Anspruch 6 oder Verfahren nach Anspruch 7 oder Verfahren nach Anspruch 8, wobei die Reaktionsaromamischung ferner 0,5 % bis 25 % eines Trägers enthält.

10. Verfahren nach Anspruch 9, wobei der Träger ein Zucker, Zuckerdefivat, modifizierte Stärke, Protein, Alkohol, Cellulose, Dextrin, Gum (Pflanzenschleim), Zuckerpolyol, Peptid, Säure, Kohlenhydrat, Hydrokolloid, Siliciumdioxid oder Kombinationen davon ist.

11. Verfahren nach Anspruch 10, ferner umfassend die Schritte:
Zufügen einer Flüssigkeit, eines Gases oder einer Kombination davon zu dem geschmolzenen Reaktionsaroma vor dem Kühlen; und
Mahlen der festen Reaktionsaromazusammensetzung, um eine Reaktionsaromazusammensetzung als Pulver zu erhalten.

12. Verfahren nach Anspruch 1, ferner umfassend einen Schritt des Erwärmens der Reaktionsaromamischung auf eine Temperatur von 40 bis 75 °C vor dem Trocknen; und wobei gegebenenfalls oder vorzugsweise die Reaktionsaromamischung vor dem Trocknen auf eine Temperatur von 65 bis 70 °C vorgeheizt wird.

13. Verfahren nach Anspruch 1, ferner umfassend den Schritt des Mahlens der festen Reaktionsaromazusammensetzung, um eine Reaktionsaromazusammensetzung als Pulver zu erhalten.

14. Verfahren nach Anspruch 1, ferner umfassend den Schritt des Zufügens einer Flüssigkeit, eines Gases oder einer Kombination davon zu dem geschmolzenen Reaktionsaroma vor dem Kühlen.

15. Verfahren nach Anspruch 1, wobei die Reaktionsaromamischung hergestellt wird, indem eine Aminosäure und ein reduzierender Zucker umgesetzt werden, wobei das Verhältnis zwischen der Aminosäure und dem reduzierenden Zucker zwischen 10:1 und 1:10 liegt.

16. Verfahren nach Anspruch 1, wobei die Reaktionsaromamischung eine Viskosität von 5 bis 500 cP bei 25 °C hat.

17. Reaktionsaromazusammensetzung, die nach dem Verfahren gemäß Anspruch 1 hergestellt ist.

18. Verbrauchsprodukt, das eine Reaktionsaromazusammensetzung nach Anspruch 17 enthält.

19. Verbrauchsprodukt nach Anspruch 18, wobei das Verbrauchsprodukt ein gebackenes Produkt, Snackprodukt, Getreideprodukt, alkoholisches und nichtalkoholisches Getränk, eine Gewürzmischung, ein regenerierfertiges Nahrungsmittel ("Ready to heat"), ein Milchprodukt, Fleischprodukt, eine Würzmischung, Ketchup, Sauce oder Trockengemüse ist; oder
wobei das Verbrauchsprodukt eine Suppe, Brühe, Nudel, gefrorene Vorspeise, ein Snack, eine Würzzubereitung, Bratensauce, ein Dessert oder eine verzehrfertige Mahlzeit ("Ready to eat") ist.

## Revendications

1. Procédé de préparation d'une composition d'arôme de réaction comprenant :
la fourniture d'un mélange d'arôme de réaction qui contient 40 % à 75 % d'un arôme de réaction et 25 % à 60 % d'eau,
le séchage du mélange d'arôme de réaction dans un évaporateur à couche mince sous un vide de 75 à 180 mmHg et à une température de film de produit de 70 à 95 °C pour obtenir un arôme de réaction fondu ayant moins de 10 % d'eau, et
le refroidissement de l'arôme de réaction fondu pour obtenir la composition d'arôme de réaction sous la forme d'un solide.

2. Procédé selon la revendication 1, dans lequel la composition d'arôme de réaction a une température de transition vitreuse de 25 °C ou plus.

3. Procédé selon la revendication 2, comprenant en outre les étapes de :
ajustement du pH du mélange d'arôme de réaction à 1,5 à 5 ;
préchauffage du mélange d'arôme de réaction après l'ajustement du pH à une température de 40 à 75 °C avant séchage ; et
alimentation du mélange d'arôme de réaction après le préchauffage dans un évaporateur à couche mince par l'intermédiaire d'une pompe d'alimentation,
dans lequel le mélange d'arôme de réaction est séché dans l'évaporateur à couche mince sous un vide de 75 à 180 mmHg et à une température de film de produit de 70 à 95 °C pendant 0,5 à 3 minutes pour obtenir un arôme de réaction fondu ayant moins de 8 % d'eau.

4. Procédé selon la revendication 3, dans lequel le pH du mélange d'arôme de réaction est ajusté à 2 à 2,5, la température du mélange d'arôme de réaction est préchauffée à 65 à 70 °C, et le mélange d'arôme de réaction est séché dans l'évaporateur à couche mince sous un vide de 80 à 100 mmHg et à une température de film de produit de 80 à 85 °C pendant 0,5 à 1,5 minute pour obtenir un arôme de réaction fondu ayant moins de 6 % d'eau.

5. Procédé selon la revendication 2, dans lequel la composition d'arôme de réaction a une température de transition vitreuse de 35 °C ou plus.

6. Procédé selon la revendication 5, comprenant en outre les étapes de :
ajustement du pH du mélange d'arôme de réaction à 1,5 à 5 ;
préchauffage du mélange d'arôme de réaction après l'ajustement de pH à une température de 40 à 75 °C avant séchage ; et
alimentation du mélange d'arôme de réaction après le préchauffage dans un évaporateur à couche mince par l'intermédiaire d'une pompe d'alimentation,
dans lequel le mélange d'arôme de réaction est séché dans l'évaporateur à couche mince sous un vide de 75 à 180 mmHg et à une température de film de produit de 70 à 95 °C pendant 0,5 à 3 minutes pour obtenir un arôme de réaction fondu ayant moins de 8 % d'eau.

7. Procédé selon la revendication 6, dans lequel le pH du mélange d'arôme de réaction est ajusté à 2 à 2,5, la température du mélange d'arôme de réaction est préchauffée à 65 à 70 °C, et le mélange d'arôme de réaction est séché dans l'évaporateur à couche mince sous un vide de 80 à 180 mmHg et à une température de film de produit de 80 à 85 °C pendant 0,5 à 1,5 minute pour obtenir un arôme de réaction fondu ayant moins de 6 % d'eau.

8. Procédé selon la revendication 1, comprenant en outre l'étape d'ajustement du pH du mélange d'arôme de réaction à 1,5 à 5, et facultativement ou de préférence, dans lequel le pH du mélange d'arôme de réaction est ajusté à 2 à 2,5.

9. Procédé selon la revendication 3, ou procédé selon la revendication 4, ou procédé selon la revendication 6 ou procédé selon la revendication 7, ou procédé selon la revendication 8, dans lequel le mélange d'arôme de réaction contient en outre 0,5 % à 25 % d'un véhicule.

10. Procédé selon la revendication 9, dans lequel le véhicule est un sucre, un dérivé de sucre, un amidon modifié, une protéine, un alcool, une cellulose, une dextrine, une gomme, un polyol de sucre, un peptide, un acide, un glucide, un hydrocolloïde, le dioxyde de silicium, ou une combinaison de ceux-ci.

11. Procédé selon la revendication 10, comprenant en outre les étapes de :
ajout d'un liquide, d'un gaz ou d'une combinaison de ceux-ci à l'arôme de réaction fondu avant refroidissement ; et
broyage de la composition d'arôme de réaction solide pour obtenir une composition d'arôme de réaction sous la forme d'une poudre.

12. Procédé selon la revendication 1, comprenant en outre une étape de chauffage du mélange d'arôme de réaction à une température de 40 à 75 °C avant séchage ; et
facultativement ou de préférence, dans lequel le mélange d'arôme de réaction est préchauffé à une température de 65 à 70 °C avant séchage.

13. Procédé selon la revendication 1, comprenant en outre l'étape de broyage de la composition d'arôme de réaction solide pour obtenir une composition d'arôme de réaction sous la forme d'une poudre.

14. Procédé selon la revendication 1, comprenant en outre l'étape d'ajout d'un liquide, d'un gaz ou d'une combinaison de ceux-ci à l'arôme de réaction fondu avant refroidissement.

15. Procédé selon la revendication 1, dans lequel le mélange d'arôme de réaction est préparé par réaction d'un acide aminé et d'un sucre réducteur, dans lequel le rapport entre l'acide aminé et le sucre réducteur est compris entre 10:1 et 1:10.

16. Procédé selon la revendication 1, dans lequel le mélange d'arôme de réaction a une viscosité de 5 à 500 cP à 25 °C.

17. Composition d'arôme de réaction préparée par le procédé selon la revendication 1.

18. Produit consommable contenant une composition d'arôme de réaction selon la revendication 17.

19. Produit consommable selon la revendication 18, le produit consommable étant un produit de boulangerie, un en-cas, un produit de céréales, une boisson alcoolisée et non alcoolisée, un mélange d'épices, un aliment prêt à chauffer, un produit laitier, un produit de viande, une préparation d'assaisonnement, un ketchup, une sauce ou des légumes séchés ; ou
le produit consommable étant une soupe, un bouillon, des nouilles, une entrée congelée, un en-cas, une préparation d'assaisonnement, une sauce, un dessert, ou un plat prêt à consommer.
